# EUROPÄISCHE PATENTSCHRIFT

(11) **EP 2 395 368 B1**
(45) Veröffentlichungstag und Bekanntmachung des Hinweises auf die Patenterteilung: **08.02.2012**
(21) Anmeldenummer: 10165650.2
(22) Anmeldetag: 11.06.2010
(51) Int. Cl.: G01S 7/483, G01S 7/484, G01S 17/10, G01S 17/42

(54) **Entfernungsmessender Laserscanner zur Erfassung von Objekten in einem Überwachungsbereich**
Distance-measuring laser scanner for detecting objects in a surveillance range
Scanner laser mesurant l'éloignement destiné à la détection d'objets dans une zone de surveillance

(43) Veröffentlichungstag der Anmeldung: 14.12.2011
(73) Patentinhaber: Sick AG, 79183 Waldkirch (DE)
(72) Erfinder: Mack, Stefan Dr., 79104 Freiburg (DE)
(74) Vertreter: Hehl, Ulrich

(56) Entgegenhaltungen:
- EP-A1- 1 923 721
- EP-A1- 2 182 377
- DE-A1- 2 216 765
- DE-A1-102006 060 108

## Beschreibung

Die Erfindung betrifft einen entfernungsmessenden Laserscanner und ein Verfahren zur Erfassung von Objekten in einem Überwachungsbereich nach dem Oberbegriff von Anspruch 1 beziehungsweise 11.

Entfernungsmessende Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Der Dynamikbereich der Empfangssignalleistung, in dem ein Laserscanner arbeitet, ist sehr hoch. Eine Ursache dafür bilden unterschiedliche Oberflächeneigenschaften und damit unterschiedliches Remissionsverhalten, welches zwischen Extremen wie schwarzer Samt einerseits und einem Reflektor andererseits schwanken kann. Eine weitere Ursache liegt in dem quadratischen Empfangssignalverlust mit dem Abstand, welcher sich beispielsweise an Objektkanten sehr abrupt ändern kann. Das Empfangssystem des Laserscanners muss so ausgelegt sein, dass eine Auswertung des Empfangssignals über diesen gesamten Dynamikbereich erfolgen kann.

Herkömmlich wird häufig im Anschluss an den Lichtempfänger ein Transimpedanzverstärker eingesetzt, der für große Empfangssignale übersteuert betrieben wird. Damit stehen aber folgenden Auswertestufen die aufgrund der teilweise drastischen Übersteuerung verlorenen Signalinformationen nicht mehr zur Verfügung, und dieser Verlust hat einen erhöhten Messfehler zur Folge. Zudem ist die Signalform stark verzerrt, die empfangenen Signale sind verbreitert und erschweren die Auswertung oder machen sie unmöglich. Dies gilt besonders bei Pulsverfahren, wenn Empfangspulse etwa infolge eines Kantentreffers sehr dicht aufeinanderfolgen. Das umgekehrte Vorgehen, eine Übersteuerung durch Anpassung des Dynamikbereichs auf starke Empfangssignale zu vermeiden, führt zu einer schlechten Erkennung von schwachen Empfangssignalen und bringt daher noch schwerwiegendere Nachteile mit sich.

Es ist bekannt, den systematischen Fehler durch die wegen Übersteuerung verzerrten Pulsformen über eine Korrekturtabelle in Abhängigkeit von der Echohöhe, also der Amplitude der empfangenen Pulse, einzulernen. Dieses Einlernen erfordert einen nicht unerheblichen Zeitaufwand und erhöht damit die Herstellkosten. Überdies ist die erzeugte Korrekturtabelle nicht unabhängig von der Gerätetemperatur, so dass sich die Messgenauigkeit über den gesamten Betriebstemperaturbereich vermindert. Außerdem hängen die Korrekturwerte stark von dem Übersteuerungsverhalten der Empfangselektronik ab. Die Robustheit des Einlernverfahrens wird deshalb stark von Chargenschwankungen der Elektronikbauteile beeinflusst.

Viele herkömmliche Laserscanner bestimmten die Lichtlaufzeit über eine Zeitmessung, die durch Signalschwellwerte getriggert wird. Aus der DE 100 27 239 A1 ist ein Verfahren zur Abstandsmessung bekannt, bei dem der vollständige Abtastvorgang von dem Aussenden eines Sendesignals bis zum Aussenden des nächsten Sendesignals ausgewertet wird. Die EP 2 182 378 A1 offenbart einen Laserscanner mit einem Analog/Digital-Wandler und einem Speicher, um das Empfangssignal zu digitalisieren und aufzuzeichnen. Beides löst aber nicht die Übersteuerungsproblematik, denn auch ein vollständig aufgezeichneter übersteuerter Empfangspuls bleibt verzerrt, und daher ist seine zeitliche Lage ohne Korrekturtabelle nicht präzise bestimmbar.

In der EP 1 936 400 A1 ist ein entfernungsmessender Laserscanner offenbart, der jeweils einen Vorpuls aussendet, um vor der eigentlichen Entfernungsmessung eine Information über die Empfangsstärke zu erhalten und die Sendestärke daran anzupassen. Dabei geht die Entfernungsinformation des nur hinsichtlich seiner Empfangsstärke ausgewerteten Vorpulses verloren.

Ein entfernungsmessender Laserscanner gemäß EP 2 182 379 A1 misst die Amplitude eines Empfangspulses und nutzt diese Information, um einen variablen Verstärker anzupassen, welcher auf denselben Empfangspuls in einem zweiten Zweig wirkt, in dem das Empfangssignal durch eine Verzögerungsleitung zeitlich versetzt ankommt. Dies erfordert schnelle Elektronik für die Bestimmung der erforderlichen Verstärkungsfaktoren und einen sehr rasch anpassbaren variablen Verstärker.

Die EP 2 182 377 A1 offenbart einen entfernungsmessenden Laserscanner, welcher das Empfangssignal in zwei Zweige leitet, nämlich einen empfindlichen Verstärkungspfad und einen unempfindlichen Verstärkungspfad, so dass das Empfangssignal zumindest in einem der Verstärkungspfade weitgehend informationsverlustfrei verstärkt werden kann. Hierzu sind aber zwei Verstärkungspfade mit doppelter Verstärkungselektronik erforderlich.

Aus der EP 1 923 721 A1 ist eine Messvorrichtung bekannt, die einen Sendelichtpuls in einen Referenzpfad und einen Messpfad aussendet und über die Laufzeitdifferenz Objektentfernungen bestimmt. In dem Messpfad ist eine Lichtleiterschleife vorgesehen, welche durch interne Reflexion an den Faserenden den Eingangspuls in eine Folge von zunehmend gedämpften Ausgangspulsen umwandelt. Für die Auswertung wird derjenige Empfangspuls für die Entfernungsbestimmung verwendet, dessen Amplitude am besten mit der Amplitude des Referenzpulses übereinstimmt.

Die DE 2 216 765 beschreibt ein Verfahren zur Entfernungsmessung nach dem Pulslaufzeitprinzip, bei dem die Amplituden der empfangenen Impulse gemessen und durch Nachregeln der Sendepulsamplituden und/oder der Empfangsausgangsamplituden auf einen Sollwert gebracht werden.

Es ist daher Aufgabe der Erfindung, einen entfernungsmessenden Laserscanner anzugeben, welcher trotz hoher Dynamik mit geringem Zusatzaufwand eine hohe Messgenauigkeit erreicht.

Diese Aufgabe wird durch einen entfernungsmessenden Laserscanner gemäß Anspruch 1 und ein Verfahren zur Erfassung von Objekten in einem Überwachungsbereich gemäß Anspruch 11 gelöst. Dabei geht die Erfindung von dem Grundgedanken aus, jeder Entfernungsbestimmung mehrere Sendelichtpulse unterschiedlicher Intensität beziehungsweise unterschiedlicher maximaler Amplitude zugrunde zu legen. Das auf die mehreren Sendelichtpulse folgende Empfangssignal wird dann untersucht, um einen Empfangslichtpuls zu finden, dessen zeitliche Lage sich besonders präzise bestimmen lässt. Die Sendelichtpulse folgen so dicht aufeinander, dass sie in aller Regel auf eine Objektoberfläche mit nahezu identischen Remissionseigenschaften treffen. Wegen der unterschiedlichen Intensitäten der Sendelichtpulse sind die Empfangslichtpulse unterschiedlich ausgeprägt. Deshalb gibt es einen Empfangslichtpuls, der sich deutlich aus dem Rauschen heraushebt, somit ein gutes Signal/Rauschverhältnis zeigt, der aber zugleich nicht übersteuert ist. Es ist denkbar, die übrigen Empfangslichtpulse ergänzend für die Auswertung der Lichtlaufzeit heranzuziehen, beispielsweise für eine Korrektur oder zur Plausibilisierung.

Die Erfindung hat den Vorteil, dass eine sehr hohe Messgenauigkeit in einem praktisch unbegrenzten Dynamikbereich erzielt wird, weil durch Wahl der Intensität der Sendelichtpulse nahezu alle Umgebungsbedingungen berücksichtigt werden können. Der Aufwand für eine Korrekturtabelle und deren Einlernen wird beträchtlich verringert. Die für die Laserklassifizierung maßgebliche Laserexposition ändert sich nur geringfügig, wenn die zusätzlichen Sendelichtpulse in ihrer Intensität entsprechend kleiner gewählt werden, als der übliche einfache Sendelichtpuls. Zusätzliche Elektronik außer einem Speicher für das Empfangssignal, der aber aus anderen Gründen ohnehin häufig vorhanden ist, wird nicht benötigt. Auch die erforderliche Rechenleistung für die Auswertung wird nur unwesentlich erhöht.

Die Auswertungseinheit ist bevorzug dafür ausgebildet, den Lichtsender so anzusteuern, dass ein schwacher Lichtpuls und ein starker Lichtpuls ausgesandt werden. Die Intensität des starken Lichtpulses liegt dabei beispielsweise in der selben Größenordnung wie bei einem herkömmlichen Laserscanner mit nur einem Sendelichtpuls. Der schwache Lichtpuls ist um eine oder mehrere Größenordnungen schwächer, beispielsweise mit einem Intensitätsverhältnis von 1:10, 1:100, 1:1000 oder sogar einem noch kleineren Intensitätsverhältnis. Bevorzugt wird zuerst der schwache Lichtpuls ausgesandt, damit nicht Ausläufer eines stark übersteuerten Empfangslichtpulses den Empfangslichtpuls des schwachen Sendelichtpulses überlagern und verfälschen.

Die Auswertungseinheit ist bevorzugt dafür ausgebildet, bei dessen ausreichendem Signal/Rauschverhältnis den schwachen Lichtpuls und sonst den starken Lichtpuls für die Entfernungsbestimmung zu verwenden. Ist demnach der Empfangslichtpuls zu dem schwachen Sendelichtpuls hinreichend stark ausgeprägt und eindeutig von dem Rauschniveau zu trennen, so wird dieser Empfangslichtpuls für die Laufzeitbestimmung verwendet. Der Empfangslichtpuls zu dem starken Sendelichtpuls befindet sich dann vermutlich in der Sättigung, dies muss aber nicht mehr geprüft werden. Ist im umgekehrten Fall der Empfangslichtpuls zu dem schwachen Sendelichtpuls nicht oder nicht hinreichend gut erkennbar, so wird der Empfangslichtpuls zu dem starken Sendelichtpuls für die Auswertung verwendet. Er befindet sich dann vermutlich nicht in Sättigung, weil offenbar die Objektremission eher schwach war. Es bestehen aber auch an dieser Stelle wenig Auswahlmöglichkeiten, weil in der beschriebenen Situation nur dieser Empfangslichtpuls für die Auswertung hinreichend ausgeprägt ist.

Die Auswertungseinheit ist bevorzugt dafür ausgebildet, die Lichtpulse unterschiedlicher Intensität mit einem zeitlichen Abstand auszusenden, welcher mindestens der Messreichweite des Laserscanners entspricht. Dazu steuert die Auswertungseinheit eine Sendeeinheit mit dem Lichtsender an. Diese Sendeeinheit umfasst vorzugsweise eine einzelne Laserdiode, welche durch unterschiedliche elektronische Ansteuerung Lichtpulse unterschiedlicher Intensität aussendet. Alternativ sind mehrere Laserdioden vorgesehen, wobei die unterschiedlichen Intensitäten den mehreren Laserdioden zugeordnet sind. Durch den zeitlichen Abstand wird eine störende Überlagerung der Empfangslichtpulse zu den mehreren Sendelichtpulsen innerhalb des Messbereichs vermieden. Üblicherweise beträgt die Dauer der Sendelichtpulse nur einige Nanosekunden. Die Messreichweite wird über die Vakuumlichtgeschwindigkeit in eine Zeit umgerechnet, wobei der doppelte Lichtweg zu berücksichtigen ist. Beispielsweise entspricht eine Messreichweite von 30 m einer Dauer von etwa 200 ns.

Es ist denkbar, dass auch Empfangslichtpulse von stark remittierenden Objekten außerhalb der Messreichweite empfangen werden. Es gibt mehrere Möglichkeiten, diesen Fall zu berücksichtigen. Dazu ist die Auswertungseinheit bevorzugt dafür ausgebildet zu erkennen, ob ein Empfangssignal einen von einem Objekt außerhalb der Messreichweite remittierten Lichtpuls enthält, indem das Empfangssignal nach Aussenden des schwachen Lichtpulses bis zum Aussenden des starken Lichtpulses mit dem Empfangssignal nach Aussenden des starken Lichtpulses verglichen wird. Dies erfolgt beispielsweise durch eine Betrachtung der Kreuzkorrelation bei Zeitversatz Null. Sind die Verläufe des Empfangssignals auf das Aussenden des schwachen und des starken Sendelichtpulses stark voneinander verschieden, so ist offenbar ausschließlich in der zweiten Hälfte des Empfangssignals ein Objekt erfasst worden, und dies lässt sich nur mit einem Objekt außerhalb der Messreichweite erklären.

Die Auswertungseinheit ist in einer weiteren bevorzugten Ausführungsform dafür ausgebildet zu erkennen, ob ein Empfangssignal einen von einem Objekt außerhalb der Messreichweite remittierten Lichtpuls enthält, indem überprüft wird, ob das Empfangssignal nach Aussenden des jeweils letzten Lichtpulses der mehreren Lichtpulse und Verstreichen einer der doppelten Messreichweite entsprechenden Zeit einen remittierten Lichtpuls enthält. Es wird also für den abschließenden Sendelichtpuls einer jeweiligen Serie von Sendelichtpulsen für eine Entfernungsbestimmung länger abgewartet, um auf ein verspätetes Echo zu einem Zeitpunkt zu warten, zu dem innerhalb der Messreichweite keine Empfangslichtpulse mehr empfangen werden könnten. Daran wird ein Objekt außerhalb der Messreichweite erkannt.

Vorzugsweise ist die Auswertungseinheit dafür ausgebildet zu erkennen, ob ein Empfangssignal einen von einem Objekt außerhalb der Messreichweite remittierten Lichtpuls enthält, indem ein der Messreichweite entsprechendes Zeitintervall des Empfangssignals nach Aussenden des starken Lichtpulses auf einen remittierten Lichtpuls überprüft wird. Sofern sich innerhalb der Messreichweite ein Objekt befindet, würde auf den starken Sendelichtpuls auf jeden Fall ein Empfangslichtpuls nachgewiesen. Wenn erst nach dem darauffolgenden schwachen Sendelichtpuls ein Empfangslichtpuls erkannt wird, muss dies demnach das verspätete Echo des starken Sendelichtpulses sein und somit von einem Objekt außerhalb der Messreichweite stammen. Vorzugsweise ist ein elektronischer Filter und ein Verstärker mit dem Lichtempfänger verbunden, welcher das Empfangssignal der mehreren Lichtpulse unterschiedlicher Intensität in gleichem Maße verstärkt. Es ist demnach kein variabler Verstärker erforderlich. Unterschiedliche Intensitäten der Empfangssignale werden durch die unterschiedlichen Intensitäten der Sendelichtpulse erzeugt.

Vorteilhafterweise ist ein Analog/Digital-Wandler vorgesehen, um das Empfangssignal zu digitalisieren, wobei ein Speicher vorgesehen ist, in dem für eine Entfernungsbestimmung das digitalisierte Empfangssignal für die mehreren Lichtpulse ablegbar ist. Demnach wird das vollständige Echo, das auf die mehreren Sendelichtpulse folgt, über ein Samplingverfahren aufgenommen und nachfolgend ausgewertet. Dazu wird das Empfangssignal beginnend mit dem ersten Sendelichtpuls einer jeweiligen Entfernungsbestimmung bis zu einem Zeitpunkt aufgezeichnet, der um eine der Messreichweite entsprechende Dauer nach dem letzten Sendelichtpuls einer jeweiligen Entfernungsbestimmung liegt. Bei zwei Sendelichtpulsen beträgt also die Aufzeichnungsdauer eine Dauer, die zwei Messreichweiten entspricht, und entsprechende Vielfache bei mehreren Sendelichtpulsen. Dies gilt dann, wenn zwischen jeweils zwei Sendelichtpulsen gerade so lange gewartet wird, wie für die Messreichweite erforderlich ist, also beispielsweise 200 ns für 30 m Messreichweite.

Der Laserscanner ist bevorzugt als Sicherheitslaserscanner ausgebildet, wobei die Auswertungseinheit dafür ausgebildet ist, die Position erfasster Objekte mit Schutzfeldern zu vergleichen und bei Erkennung eines unzulässigen Schutzfeldeingriffs einen sicheren Ausgang mit einem Abschaltsignal anzusteuern. In dieser sicherheitstechnischen Anwendung ist die hohe Störfestigkeit gegenüber Dynamikschwankungen besonders vorteilhaft.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer Ausführungsform eines erfin- dungsgemäßen Laserscanners;
- Fig. 2: ein beispielhafter zeitlicher Intensitätsverlauf der Sendelichtpulse im Falle eines schwachen Sendelichtpulses, auf den ein starker Sendelichtpuls folgt;
- Fig. 3a: ein beispielhafter zeitlicher Intensitätsverlauf des Empfangssignals auf das Sendesignal der Figur 2 bei Erfassung eines stark remittierenden Objekts;
- Fig. 3b: ein beispielhafter zeitlicher Intensitätsverlauf des Empfangssignals auf das Sendesignal der Figur 2 bei Erfassung eines schwach remittierenden Ob- jekts; und
- Fig. 3c: ein beispielhafter zeitlicher Intensitätsverlauf des Empfangssignals auf das Sendesignal der Figur 2 bei einem Kantentreffer.

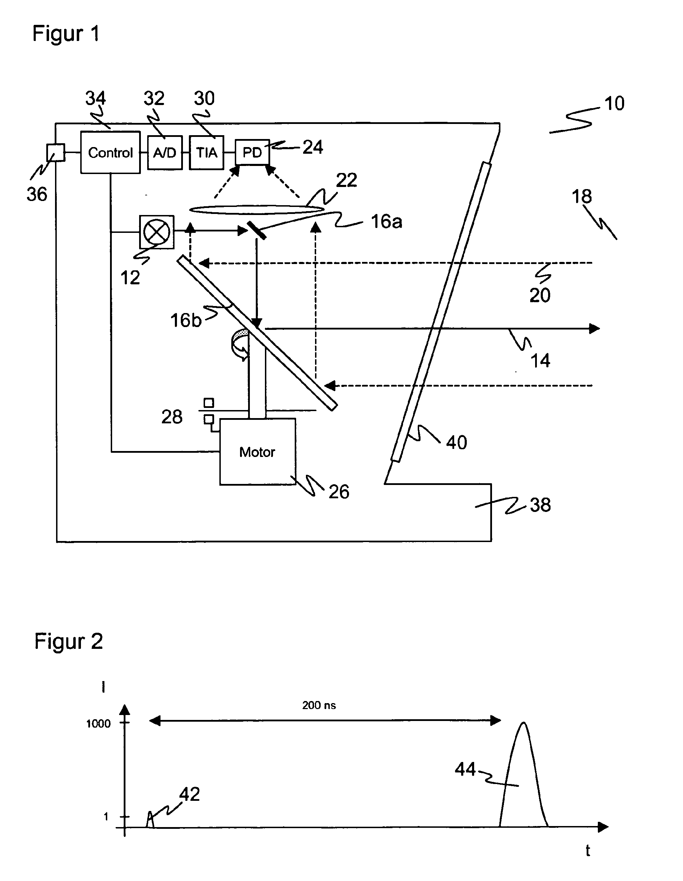

Figur 1 zeigt eine schematische Schnittdarstellung durch einen Laserscanner 10. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, der durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit periodisch den durch die Rotationsbewegung erzeugten Überwachungsbereich 18. Wird von dem Lichtempfänger 24 ein reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

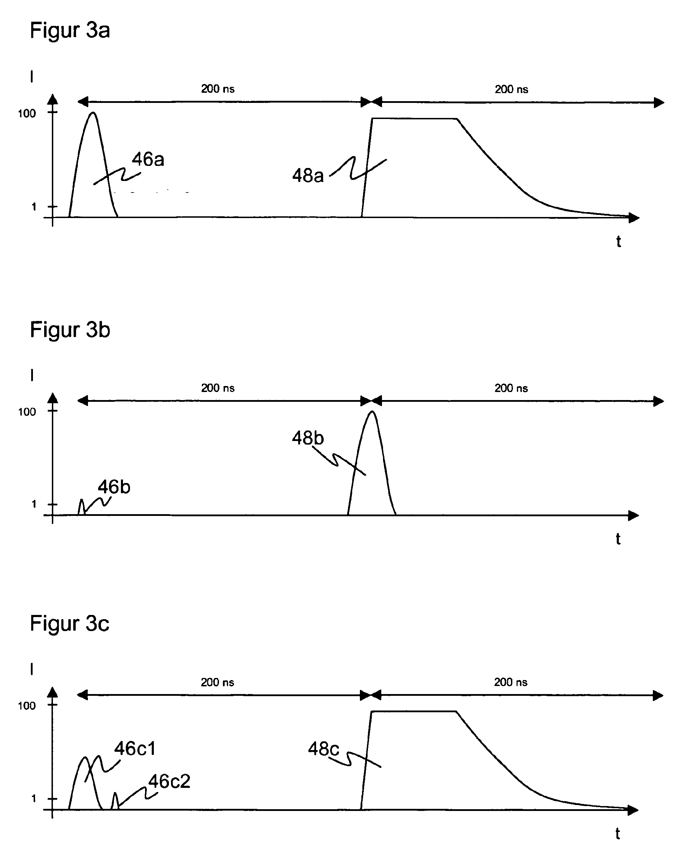

Zusätzlich wird die Laufzeit der einzelnen Laserlichtpulse von ihrem Aussenden bis zu dem Empfang nach Reflexion an dem Objekt in dem Überwachungsbereich 18 ermittelt. Wie weiter unten anhand der Figuren 2 und 3 näher erläutert, werden für eine Laufzeitbestimmung mehrere Sendelichtpulse unterschiedlicher Amplituden ausgesandt. Aus der Lichtlaufzeit wird unter Verwendung der Lichtgeschwindigkeit auf die Entfernung des Objektes von dem Laserscanner 10 geschlossen.

Um das von dem Lichtempfänger 24 erzeugte Empfangssignal auszuwerten, wird es elektronisch gefiltert, in einem Verstärker 30 verstärkt und in einem Analog/DigitalWandler 32 digitalisiert. Einer Auswertungseinheit 34 steht somit der Empfangssignalverlauf seit Aussendung eines ersten Sendelichtpulses für eine jeweilige Lichtlaufzeitbestimmung bis zum Ablauf einer Dauer zur Verfügung, innerhalb derer sämtliche Empfangslichtpulse den Laserscanner 10 wieder erreicht haben, die von Objekten innerhalb einer Messreichweite reflektiert sein können.

Die Auswertungseinheit 34 ist außerdem mit dem Lichtsender 12, um das Aussenden von Sendelichtpulsen einer gewünschten Intensität zu einem vorgebbaren Zeitpunkt auszulösen sowie dem Motor 26 und dem Encoder 28 verbunden, um die Rotationsbewegung der Ablenkeinheit 16a-b zu steuern und die jeweilige Winkelstellung zu bestimmen. Der Auswertungseinheit 34 stehen deshalb über den Winkel und die Entfernung zweidimensionale Polarkoordinaten aller Objekte in dem Überwachungsbereich 18 zur Verfügung. Diese Objektpositionen und eventuell auch Objektkonturen sind in allgemeiner Anwendung das gewünschte Messergebnis, welches über einen Ausgang 36 ausgebbar ist. In einer sicherheitstechnischen Anwendung ist der Laserscanner 10 als Sicherheitsscanner im Sinne der einleitend genannten Normen ausgebildet, und die Auswertungseinheit 34 prüft anhand der Objektpositionen, ob sich ein unzulässiges Objekt in einem Schutzfeld innerhalb des Überwachungsbereichs 18 befindet. Ist das der Fall, so wird an dem Ausgang 36 ein Abschaltsignal ausgegeben. Dafür ist der Ausgang 36 in diesem Fall sicher ausgebildet (OSSD, Output Signal Switching Device).

Alle genannten Funktionskomponenten sind in einem Gehäuse 38 angeordnet, das frontseitig, also im Bereich des Lichtaus- und Lichteintritts, eine Frontscheibe 40 aufweist. Die Frontscheibe 38 ist zur Vermeidung von direkten Reflexionen in den Lichtempfänger 24 schräg gestellt, so dass Lichtstrahl 14 und Frontscheibe 40 einen Winkel ungleich neunzig Grad einschließen.

Erfindungsgemäß ist vorgesehen, jeder Entfernungsbestimmung mehrere Sendelichtpulse zugrunde zu legen. Figur 2 zeigt einen beispielhaften zeitlichen Intensitätsverlauf des Sendesignals. Dabei wird zunächst ein schwacher Sendelichtpuls 42 einer sehr kleinen Intensität und nachfolgend ein starker Sendelichtpuls 44 mit einer Intensität ausgesandt, welche für eine sichere Objekterkennung auch schwach remittierender Objekte über die geforderte Messreichweite ausreicht. Das Intensitätsverhältnis des schwachen Sendelichtpulses 42 gegenüber dem starken Sendelichtpuls 44 beträgt beispielsweise 1:1000.

Die beiden Sendelichtpulse 42, 44 haben zueinander einen zeitlichen Abstand, der einem Vielfachen der Pulsbreite entspricht. Eine sinnvolle Wahl für den zeitlichen Abstand ist in etwa die Signallaufzeit eines Lichtpulses für die maximale Messentfernung. Die in Figur 2 mit einem beispielhaften Abstand von 200 ns dargestellten Sendelichtpulse 42, 44 sind demnach für eine Messreichweite von bis zu etwa 30 m geeignet. Da die Rotationsbewegung der Ablenkeinheit 16a-b in 200 ns nahezu vernachlässigbar ist, treffen beide Sendelichtpulse 42, 44 näherungsweise auf denselben Objektpunkt mit identischen Remissionseigenschaften. Für die Auswertung wird das Empfangssignal zumindest über den doppelten Zeitraum aufgezeichnet, welcher der Messreichweite entspricht, in diesem Falle demnach etwa 400 ns ab Aussenden des schwachen Sendelichtpulses 42.

Abweichend von der Darstellung der Figur 2 können auch drei oder noch mehr Sendelichtpulse unterschiedlicher Pulshöhe ausgesandt werden. Die Aufzeichnungszeit für das Empfangssignal wird dann der Anzahl und dem zeitlichen Abstand der Sendelichtpulse angepasst. Dabei können die einzelnen Pulshöhen in einer Sendelichtpulsfolge monoton ansteigen oder monoton fallen, es sind aber auch andere Verteilungen denkbar.

Figur 3 zeigt das Empfangssignal als zeitlichen Intensitätsverlauf, wie es nach Verstärkung in dem Verstärker 30 und Digitalisierung in dem Analog/Digitalwandler 32 für die Auswertungseinheit 34 gespeichert wird. Dabei sind in den Figuren 3a-c unterschiedliche Remissionseigenschaften der jeweils angetasteten Objekte dargestellt. Der Aufzeichnungszeitraum beträgt jeweils 200 ns für jeden der beiden Sendelichtpulse 42, 44.

In Figur 3a hat der Laserscanner 10 ein Objekt mit hoher Remission erfasst. Die Remission hängt beispielsweise von Farbe und Material der Objektoberfläche, deren Glanzeigenschaften, der Kontur und dem Winkel zu dem Lichtstrahl 14 sowie von der Entfernung zwischen Laserscanner 10 und Objekt ab. Wegen der hohen Remission entsteht ein entsprechend starker erster Empfangslichtpuls 46a als Echo des schwachen Sendelichtpulses 42. Aufgrund der geringen Intensität des schwachen Sendelichtpulses 42 bleibt die Pulsform für den ersten Empfangslichtpuls 46a unverzerrt erhalten. Ein zweiter Empfangslichtpuls 48a in der zweiten Aufzeichnungshälfte dagegen, der als Echo des starken Sendelichtpulses 44 erfasst wird, treibt den Verstärker 30 weit in die Sättigung und führt zu einer stark übersteuerten, verbreiterten Pulsform. Während die zeitliche Lage des unverzerrten ersten Empfangslichtpulses 46a präzise bestimmt werden kann, besteht eine große Messunsicherheit für die zeitliche Lage des zweiten Empfangslichtpulses 48a. Die Auswertungseinheit 34 erkennt, dass der erste Empfangslichtpuls 46a hinreichend ausgeprägt und klar von einem Rauschniveau unterscheidbar ist. Deshalb wird in dieser Situation nur der erste Empfangslichtpuls 46a für die Laufzeitbestimmung verwendet. Der zweite Empfangslichtpuls 48a kann zur Korrektur oder zum Vergleich für eine Plausibilisierung ergänzend zu der Auswertung hinzugezogen werden.

Figur 3b zeigt die komplementäre Situation, in welcher der Laserscanner 10 ein Objekt mit geringer Remission erfasst. Deshalb ist der erste Empfangslichtpuls 46b kaum detektierbar und könnte leicht mit einem Rauschereignis verwechselt werden. Der zweite Empfangslichtpuls 48b dagegen wird deutlich und mit unverzerrter Pulsform erfasst. Die Auswertungseinheit 34 erkennt, dass der erste Empfangslichtpuls 46b für die Laufzeitbestimmung nicht geeignet ist, soweit sie den ersten Empfangslichtpuls 46b überhaupt als solchen erfasst. Deshalb wird die Laufzeit in dieser Situation mit Hilfe des zweiten Empfangslichtpulses 48b bestimmt.

Figur 3c zeigt das Empfangssignal bei einem sogenannten Kantentreffer. Der erste Empfangslichtpuls 46c spaltet dabei in zwei Teillichtpulse 46c1, 46c2 auf. Beispielsweise stammt der erste Teillichtpuls 46c1 von einem Objekt hoher Remission, etwa einem Retroreflektor und der zweite Teillichtpuls 46c2 von einem Objekt vergleichsweise kleiner Remission, wie einem Blatt weißen Papiers, in einem Abstand von einigen Metern hinter dem Objekt hoher Remission. Ein derartiger Kantentreffer führt demnach dazu, dass statt eines Empfangslichtpulses zwei getrennte, unterschiedlich hohe Teillichtpulse 46c1, 46c2 entstehen. Selbstverständlich kann abweichend von der Darstellung auch ein kleineres Echo einem größeren Echo vorausgehen.

Der zweite Empfangslichtpuls 48c ist derart übersteuert, dass die beiden unterschiedlichen Objekte des Kantentreffers gar nicht aufgelöst werden, sondern in einem einzigen breiten Empfangspuls 48c aufgehen. Die Auswertungseinheit 34 könnte den Kantentreffer anhand des zweiten Empfangspulses 48c gar nicht erkennen und auch keine präzise Lichtlaufzeit bestimmen.

Wie die Beispiele der Figuren 3a-c illustrieren, erscheinen Empfangslichtpulse 46a, 46c von Objekten mit hoher Remission in der ersten Hälfte des Aufzeichnungszeitraums ohne Übersteuerung, und die Auswertungseinheit 34 kann mit deren Hilfe die Lichtlaufzeit bestimmen. Empfangslichtpulse 48b von Objekten mit geringer Remission dagegen sind nur in der zweiten Hälfte des Aufzeichnungszeitraums mit einem guten Signal/Rauschverhältnis nachweisbar und werden dort ausgewertet.

Wird ein Objekt großer Remission außerhalb der Messreichweite angetastet, also beispielsweise weiter als 30 m entfernt, so wird der zugehörige Empfangslichtpuls 46 in der zweiten Hälfte des Aufzeichnungszeitraums liegen, obwohl es sich noch um eine verspätete Antwort auf den schwachen ersten Sendelichtpuls 42 handelt. Dies könnte von der Auswertungseinheit 34 ohne zusätzliche Maßnahme als Empfangslichtpuls 48 des starken zweiten Sendelichtpulses 44 missinterpretiert werden. Es gibt jedoch mehrere Möglichkeiten, diesen Fehler auszuschließen.

Eine erste Möglichkeit sieht vor, das Empfangssignal in zwei Hälften aufzuteilen und die beiden Hälften einer Kreuzkorrelation zu unterziehen. Ist der Korrelationswert für die Zeitdifferenz Null unterhalb eines Schwellwerts, so handelt es sich um ein verspätetes Echo, es liegt also ein verspäteter Empfangslichtpuls 46 auf den schwachen Sendelichtpuls 42 vor. Denn die Kreuzkorrelation zeigt, dass ein Empfangslichtpuls 46 ausschließlich in der zweiten Hälfte des Aufzeichnungszeitraums vorliegt, somit von einem Objekt außerhalb der Messreichweite stammt.

Eine zweite Möglichkeit besteht darin, den Aufzeichnungszeitraum so weit zu verlängern, dass auch verspätete Echos auf den zweiten starken Sendelichtpuls 44 noch erfasst werden. Dazu wird der Aufzeichnungszeitraum um eine Dauer verlängert, die der Messreichweite entspricht. Im Beispiel der Figur 3 wird also ein Aufzeichnungszeitraum von 600 ns oder dem dreifachen Abstand der Sendelichtpulse 42, 44 gewählt. Tritt in dem verlängerten Aufzeichnungszeitraum ein Empfangslichtpuls 46, 48 auf, so handelt es sich notwendig um ein verspätetes Echo eines außerhalb der Messreichweite befindlichen Objekts, denn sämtliche Remissionen von Objekten innerhalb der Messreichweite von beispielsweise 30 m sind aufgrund der Lichtgeschwindigkeit nach spätestens 200 ns zu dem Laserscanner 10 zurückgekehrt.

Nach einer dritten Möglichkeit wird abweichend von der Figur 2 zuerst der starke Sendelichtpuls 44 und erst anschließend der schwache Sendelichtpuls 42 ausgesandt. Tritt dann ein Empfangslichtpuls 46 ausschließlich in der zweiten Hälfte des Aufzeichnungszeitraums auf, so ist dies für ein Objekt innerhalb der Messreichweite unplausibel, denn dieses Objekt hätte bereits innerhalb der ersten Hälfte des Aufzeichnungszeitraums ein Echo erzeugt. Grundsätzlich ist aber bevorzugt, den schwachen Sendelichtpuls 42 zuerst auszusenden, weil verspätete Echos des starken Sendelichtpulses 44 sonst die Empfangslichtpulse des schwachen Sendelichtpulses überlagern und verdecken.

## Patentansprüche

1. Entfernungsmessender Laserscanner (10) zur Erfassung von Objekten in einem Überwachungsbereich (18) mit einem Lichtsender (12) zum Aussenden von Lichtpulsen (14, 42, 44), einer Ablenkeinheit (16) zur periodischen Abtastung des Überwachungsbereichs (18) mit den Lichtpulsen (42, 44), einem Lichtempfänger (24) zum Erzeugen eines Empfangssignals aus von den Objekten remittierten Lichtpulsen (20, 42, 44) sowie mit einer Auswertungseinheit (34), die dafür ausgebildet ist, die Entfernung eines Objekts aus einer Laufzeit eines Lichtpulses (46, 48) zu bestimmen, den Lichtsender (12) so anzusteuern, dass für eine Entfernungsbestimmung mehrere Lichtpulse (42, 44) unterschiedlicher Intensität ausgesandt werden und für die Entfernungsbestimmung einen der Lichtpulse (46, 48) unterschiedlicher Intensität anhand des Empfangssignals auszuwählen,
**dadurch gekennzeichnet,**
**dass** die Auswertungseinheit weiter dafür ausgebildet ist, den Lichtsender (12) derart unterschiedlich elektronisch anzusteuern, dass ein schwacher Lichtpuls (42) und nachfolgend ein starker Lichtpuls (44) ausgesandt wird, wobei der schwache Lichtpuls (42) um eine oder mehrere Größenordnungen schwächer ist als der starke Lichtpuls (44).

2. Laserscanner (10) nach Anspruch 1,
wobei das Intensitätsverhältnis des schwachen Lichtpulses (42) zu dem starken Lichtpuls (44) von 1:10, 1:100 oder 1:1000 beträgt.

3. Laserscanner (10) nach Anspruch 1 oder 2,
wobei die Auswertungseinheit (34) dafür ausgebildet ist, bei dessen ausreichendem Signal/Rauschverhältnis den schwachen Lichtpuls (46) und sonst den starken Lichtpuls (48) für die Entfernungsbestimmung zu verwenden.

4. Laserscanner (10) nach einem der vorhergehenden Ansprüche,
wobei die Auswertungseinheit (34) dafür ausgebildet ist, die Lichtpulse (42, 44) unterschiedlicher Intensität mit einem zeitlichen Abstand auszusenden, welcher mindestens der Messreichweite des Laserscanners (10) entspricht.

5. Laserscanner (10) nach einem der vorhergehenden Ansprüche, wobei die Auswertungseinheit (34) dafür ausgebildet ist zu erkennen, ob ein Empfangssignal einen von einem Objekt außerhalb der Messreichweite remittierten Lichtpuls enthält, indem das Empfangssignal nach Aussenden des schwachen Lichtpulses (42) bis zum Aussenden des starken Lichtpulses (44) mit dem Empfangssignal nach Aussenden des starken Lichtpulses (44) verglichen wird.

6. Laserscanner (10) nach einem der vorhergehenden Ansprüche, wobei die Auswertungseinheit (34) dafür ausgebildet ist zu erkennen, ob ein Empfangssignal einen von einem Objekt außerhalb der Messreichweite remittierten Lichtpuls enthält, indem überprüft wird, ob das Empfangssignal nach Aussenden des jeweils letzten Lichtpulses (44) der mehreren Lichtpulse (42, 44) und Verstreichen einer der doppelten Messreichweite entsprechenden Zeit einen remittierten Lichtpuls enthält.

7. Laserscanner (10) nach einem der vorhergehenden Ansprüche,
wobei die Auswertungseinheit (34) dafür ausgebildet ist zu erkennen, ob ein Empfangssignal einen von einem Objekt außerhalb der Messreichweite remittierten Lichtpuls enthält, indem ein der Messreichweite entsprechendes Zeitintervall des Empfangssignals nach Aussenden des starken Lichtpulses (44) auf einen remittierten Lichtpuls überprüft wird.

8. Laserscanner (10) nach einem der vorhergehenden Ansprüche,
wobei ein elektronischer Filter und ein Verstärker (30) mit dem Lichtempfänger (24) verbunden ist, welcher das Empfangssignal der mehreren Lichtpulse (42, 44) unterschiedlicher Intensität in gleichem Maße verstärkt.

9. Laserscanner (10) nach einem der vorhergehenden Ansprüche,
wobei ein Analog/Digital-Wandler (32) vorgesehen ist, um das Empfangssignal zu digitalisieren, und wobei ein Speicher (34) vorgesehen ist, in dem für eine Entfernungsbestimmung das digitalisierte Empfangssignal für die mehreren Lichtpulse (46, 48) ablegbar ist.

10. Laserscanner (10) nach einem der vorhergehenden Ansprüche,
der als Sicherheitslaserscanner ausgebildet ist, wobei die Auswertungseinheit (34) dafür ausgebildet ist, die Position erfasster Objekte mit Schutzfeldern zu vergleichen und bei Erkennung eines unzulässigen Schutzfeldeingriffs einen sicheren Ausgang (36) mit einem Abschaltsignal anzusteuern.

11. Verfahren zur Erfassung von Objekten in einem Überwachungsbereich (18), bei dem mit einem entfernungsmessenden Laserscanner (10) mehrere Lichtpulse (14, 42, 44) unterschiedlicher Intensität ausgesandt werden und aus den an Objekten in dem Überwachungsbereich (18) remittierten Lichtpulsen (20, 42, 44) ein Empfangssignal erzeugt wird, wobei die Lichtpulse (42, 44) zur Abtastung des Überwachungsbereichs (18) periodisch abgelenkt und die Entfernungen der Objekte aus einer Laufzeit eines Lichtpulses (46, 48) bestimmt werden, wobei für die Entfernungsbestimmung einer der Lichtpulse (46, 48) unterschiedlicher Intensität anhand des Empfangssignals ausgewählt wird,
**dadurch gekennzeichnet,**
**dass** durch elektronische Ansteuerung eines Lichtsenders (12) ein schwacher Lichtpuls (42) und nachfolgend ein starker Lichtpuls (44) ausgesandt wird, wobei der schwache Lichtpuls (42) um eine oder mehrere Größenordnungen schwächer ist als der starke Lichtpuls (44).

12. Verfahren nach Anspruch 11,
wobei das Intensitätsverhältnis des schwachen Lichtpulses (42) zu dem starken Lichtpuls (44) 1:10, 1:100 oder 1:1000 beträgt, und wobei bei dessen ausreichendem Signal/Rauschverhältnis der schwache Lichtpuls (42) und sonst der starke Lichtpuls (44) für die Entfernungsbestimmung verwendet wird.

13. Verfahren nach Anspruch 11 oder 12,
wobei das Empfangssignal der mehreren Lichtpulse (42, 44) unterschiedlicher Intensität in gleichem Maße verstärkt wird, und wobei das verstärkte Empfangssignal digitalisiert und nach jedem ausgesandten Lichtpuls (42, 44) zumindest über einen Zeitraum gespeichert wird, welcher einer Messreichweite des Laserscanners (10) entspricht.

14. Verfahren nach einem der Ansprüche 11 bis 13,
wobei erkannt wird, ob ein Empfangssignal einen von einem Objekt außerhalb der Messreichweite remittierten Lichtpuls enthält.

15. Verfahren nach einem der Ansprüche 11 bis 14,
wobei die Position erfasster Objekte mit Schutzfeldern verglichen und bei Erkennung eines unzulässigen Schutzfeldeingriffs ein sicherer Ausgang (36) mit einem Abschaltsignal angesteuert wird.

## Claims

1. A distance measuring laser scanner (10) for the detection of objects in a monitoring area (18), with a light transmitter (12) for transmission of light pulses (14, 42, 44), a deflection unit (16) for periodically scanning the monitoring area (18) with the light pulses (42, 44), a light receiver (24) for generating a reception signal from light pulses (20, 42, 44) remitted by the objects, and with an evaluation unit (34) configured to determine the distance of an object from a time of flight of a light pulse (46, 48), to control the light transmitter (12) such that for a determination of the distance multiple light pulses (42, 44) of differing intensity are transmitted, and to select one of the light pulses (46, 48) of differing intensity for the determination of the distance based on the reception signal,
**characterized in that**
the evaluation unit is further configured to control the light transmitter (12) in a different way such that a weak light pulse (42) and subsequently a strong light pulse (44) is transmitted, wherein the weak light pulse (42) is weaker than the strong light pulse (44) by one or several orders of magnitude.

2. The laser scanner (10) according to claim 1,
wherein the ratio of intensity of the weak light pulse (42) to the strong light pulse (44) is 1/10, 1/100 or 1 /1000.

3. The laser scanner (10) according to claim 1 or 2,
wherein the evaluation unit (34) is configured to use the weak light pulse (46) for the distance measurement if its signal to noise ratio is sufficient, and the strong light pulse (48) in the other case.

4. The laser scanner (10) according to any of the preceding claims,
wherein the evaluation unit (34) is configured to transmit the light pulses (42, 44) of differing intensity with a time offset that corresponds at least to the measuring range of the laser scanner (10).

5. The laser scanner (10) according to any of the preceding claims,
wherein the evaluation unit (34) is configured to detect whether a reception signal includes a light pulse remitted from an object outside the measuring range by comparing the reception signal after transmission of the weak light pulse (42) up to transmission of the strong light pulse (44) with the reception signal after transmission of the strong light pulse (44).

6. The laser scanner (10) according to any of the preceding claims,
wherein the evaluation unit (34) is configured to detect whether a reception signal includes a light pulse remitted from an object outside the measuring range by evaluating whether the reception signal after the transmission of the respective last light pulse (44) of the multiple light pulses (42, 44) and after expiry of a time corresponding to a double measuring range includes a remitted light pulse.

7. The laser scanner (10) according to any of the preceding claims,
wherein the evaluation unit (34) is configured to detect whether a reception signal includes a remitted light pulse from an object outside the measuring range by evaluating a time interval of the reception signal after transmission of the strong light pulse (44) corresponding to the measuring range for a remitted light pulse.

8. The laser scanner (10) according to any of the preceding claims,
wherein an electronic filter and an amplifier (30) are connected to the light receiver (24) that amplifies the reception signal of the multiple light pulses (42, 44) of differing intensity by an equal degree.

9. The laser scanner (10) according to any of the preceding claims,
wherein an analog digital converter (32) is provided to digitize the reception signal, and wherein a memory (34) is provided in which the digitized reception signal for the multiple light pulses (46, 48) can be stored for a distance measurement.

10. The laser scanner (10) according to any of the preceding claims,
that is made as a safety laser scanner, wherein the evaluation unit (34) is configured to compare the position of detected objects with protection zones and to activate a safety output (36) with a stop signal upon detection of a forbidden protection zone intrusion.

11. A method for detection of objects in a monitoring area (18), wherein multiple light pulses (14, 42, 44) of differing intensity are transmitted by a distance measuring laser scanner (10) and wherein a reception signal is generated from the light pulses (20, 42, 44) remitted from objects in the monitoring area (18), wherein the light pulses (42, 44) are periodically deflected to scan the monitoring area (18) and wherein the distances of the objects are determined from a time of flight of a light pulse (46, 48), wherein one of the light pulses (46, 48) of differing intensity is selected for the distance measurement based on the reception signal,
**characterized in that**
by electronic control of a light transmitter (12) a weak light pulse (42) and subsequently a strong light pulse (44) are transmitted, wherein the weak light pulse (42) is weaker than the strong light pulse (44) by one or several orders of magnitude.

12. The method according to claim 11,
wherein the ratio of intensity of the weak light pulse (42) to the strong light pulse (44) is 1/10, 1/100 or 1/1000, and wherein the weak light pulse (42) is used for the distance measurement if its signal to noise ratio is sufficient, and the strong light pulse (44) in the other case.

13. The method according to claim 11 or 12,
wherein the reception signal of the multiple light pulses (42, 44) of differing intensity are amplified by an equal degree, and wherein the amplified reception signal is digitized and is stored after each transmitted light pulse (42, 44) for at least a time interval corresponding to a measuring range of the laser scanner (10).

14. The method according to any of claims 11 to 13,
wherein it is detected whether a reception signal includes a light pulse remitted by an object outside the measuring range.

15. The method according to any of claims 11 to 14,
wherein the position of detected objects is compared with protection zones, and wherein a safety output (36) is activated with a stop signal upon detection of a forbidden protection zone intrusion

## Revendications

1. Scanner laser (10) pour la mesure de distance pour la détection d'objets dans une zone de surveillance (18), avec un émetteur de lumière (12) pour la transmission des impulsions de lumière (14, 42, 44), une unité de déflexion (16) pour scanner périodiquement la zone de surveillance (18) avec les impulsions de lumière (42, 44), un récepteur de lumière (24) pour générer un signal de la réception d'impulsions lumineuses (20, 42, 44) remis par les objets, et avec une unité d'évaluation (34) configurée pour déterminer la distance d'un objet d'une durée de vol d'une impulsion de lumière (46, 48), pour contrôler l'émetteur de lumière (12) tel que plusieurs impulsions de la lumière (42 , 44) de différente intensité sont transmises pour une détermination de distance, et pour sélectionner une des impulsions de lumière (46, 48) de différente intensité en fonction du signal de réception pour la détermination de la distance, **caractérisé en ce que** l'unité d'évaluation est encore configurée pour contrôler électroniquement l'émetteur de lumière (12) d'une manière différente tel qu'une impulsion de lumière faible (42) et ensuite une impulsion de lumière intense (44) est transmise, et **en ce que** l'impulsion de lumière faible (42) est plus faible par un ou plusieurs ordres de grandeur que l'impulsion de lumière intense (44).

2. Scanner laser (10) selon la revendication 1, **caractérisé en ce que** le rapport de l'intensité de l'impulsion de lumière faible (42) à l'impulsion de lumière intense (44) est 1/10, 1/100 ou 1 /1000.

3. Scanner laser (10) selon la revendication 1 ou 2, **caractérisé en ce que** l'unité d'évaluation (34) est configurée pour utiliser l'impulsion de lumière faible (46) pour la mesure de distance si son rapport signal-bruit est suffisant et sinon dans l'autre cas l'impulsion de lumière intense (48).

4. Scanner laser (10) selon l'une des revendications précédentes, **caractérisé en ce que** l'unité d'évaluation (34) est configurée pour transmettre les impulsions de lumière (42, 44) de différente intensité avec un décalage de temps qui correspond au moins à la portée de mesure du scanner laser (10).

5. Scanner laser (10) selon l'une des revendications précédentes, **caractérisé en ce que** l'unité d'évaluation (34) est configurée pour détecter si un signal de réception comprend une impulsion de lumière remise par un objet en dehors de la portée de mesure en comparant le signal de réception après la transmission de l'impulsion de lumière faible (42) jusqu'à la transmission de l'impulsion de lumière intense (44) avec le signal de réception après la transmission de l'impulsion de lumière intense (44).

6. Scanner laser (10) selon l'une des revendications précédentes, **caractérisé en ce que** l'unité d'évaluation (34) est configurée pour détecter si un signal de réception comprend une impulsion de lumière remise par un objet en dehors de la portée de mesure en évaluant si le signal de réception comprend une impulsion de lumière remise après la transmission de chaque dernière impulsion lumineuse (44) des plusieurs impulsions lumineuses (42, 44) et après l'expiration d'un temps correspondant à une double portée de mesure.

7. Scanner laser (10) selon l'une des revendications précédentes, **caractérisé en ce que** l'unité d'évaluation (34) est configurée pour détecter si un signal de réception comprend une impulsion de lumière remise par un objet en dehors de la portée de mesure en évaluant si un intervalle de temps correspondant à la portée de mesure du signal de réception comprend une impulsion de lumière remise après la transmission de l'impulsion de lumière intense (44).

8. Scanner laser (10) selon l'une des revendications précédentes, **caractérisé en ce qu'**un filtre électronique et un amplificateur (30) sont connectés au récepteur de lumière (24) qui amplifie au même degré le signal de réception des plusieurs impulsions lumineuses (42, 44) de différente intensité.

9. Scanner laser (10) selon l'une des revendications précédentes, **caractérisé en ce qu'**un convertisseur analogique numérique (32) est prévu pour numériser le signal de réception et **en ce qu'**une mémoire (34) est prévue, dans laquelle pour une mesure de distance le signal de réception numérique des plusieurs impulsions lumineuses (46, 48) peut être stocké.

10. Scanner laser (10) selon l'une des revendications précédentes, **caractérisé en ce qu'**il est formé comme un scanner laser de sécurité, dont l'unité d'évaluation (34) est configurée pour comparer les positions des objets détectés avec des zones de protection et pour activer une sortie de sécurité (36) avec un signal d'arrêt lors de la détection d'intrusion interdite dans une zone de protection.

11. Procédé pour la détection d'objets dans une zone de surveillance (18), dont les plusieurs impulsions de lumière (14, 42, 44) de différente intensité sont transmises par un scanner laser pour la mesure de distance (10) et dont un signal de réception est généré à partir des impulsions de lumière (20, 42, 44) remises par les objets dans la zone de surveillance (18), dont les impulsions de lumière (42, 44) sont périodiquement déviées pour scanner la zone de surveillance (18) et dont les distances des objets sont déterminées à partir d'une durée de vol d'une impulsion de lumière (46, 48), dont l'une des impulsions de lumière (46, 48) de différente intensité est sélectionnée pour la mesure de distance basée sur le signal de réception, **caractérisé en ce qu'**une impulsion de lumière faible (42) et ensuite une impulsion de lumière intense (44) est transmise par le contrôle électronique d'un émetteur de lumière (12) et **en ce que** l'impulsion de lumière faible (42) est plus faible par un ou plusieurs ordres de grandeur que l'impulsion de lumière intense (44).

12. Procédé selon la revendication 11, **caractérisé en ce que** le rapport de l'intensité de l'impulsion de lumière faible (42) à l'impulsion de lumière intense (44) est 1/10, 1/100 ou 1/1000, et **en ce que** l'impulsion de lumière faible (42) est utilisée pour la mesure de distance si son rapport signal sur bruit est suffisant et sinon dans l'autre cas l'impulsion de lumière intense (44).

13. Procédé selon la revendication 11 ou 12, **caractérisé en ce que** le signal de réception des plusieurs impulsions de lumière (42, 44) de différente intensité est amplifié au même degré, et **en ce que** le signal de réception amplifié est numérisé et est stocké après chaque impulsion de lumière transmise (42, 44) pour le moins d'un intervalle de temps correspondant à une portée de mesure du scanner laser (10).

14. Procédé selon l'une quelconque des revendications 11 à 13, **caractérisé en ce qu'**on détecte si un signal de réception comprend une impulsion de lumière remise par un objet en dehors de la portée de mesure.

15. Procédé selon l'une des revendications 11 à 14, **caractérisé en ce que** la position des objets détectés est comparée avec des zones de protection, et **en ce qu'**une sortie de sécurité (36) est activée par un signal d'arrêt lors de la détection d'une intrusion interdite dans la zone de protection.
